# EUROPÄISCHE PATENTSCHRIFT

(11) **EP 2 966 657 B1**
(45) Veröffentlichungstag und Bekanntmachung des Hinweises auf die Patenterteilung: **18.11.2020**
(21) Anmeldenummer: 15175720.0
(22) Anmeldetag: 07.07.2015
(51) Int. Cl.: H01F 7/126, H01F 7/16, H01F 7/127, F16K 31/06

(54) **ELEKTROMAGNETVENTIL**
ELECTROMAGNETIC VALVE
SOUPAPE ELECTROMAGNETIQUE

(30) Priorität: 08.07.2014 DE 102014109507
(43) Veröffentlichungstag der Anmeldung: 13.01.2016
(73) Patentinhaber: SVM Schultz Verwaltungs-GmbH & Co. KG, 87700 Memmingen (DE)
(72) Erfinder: Müller, Robert, 86842 Türkheim (DE); Schweikert, Mario, 87700 Memmingen (DE)
(74) Vertreter: Patentanwälte Olbricht, Buchold, Keulertz Partnerschaft mbB

(56) Entgegenhaltungen:
- EP-A1- 0 683 445
- WO-A1-99/22384
- DE-A1- 3 925 794
- DE-A1- 4 237 681
- DE-A1- 19 810 241
- DE-A1-102013 203 711
- US-A1- 2004 262 557

## Beschreibung

Die Erfindung betrifft ein Magnetventil mit einem Elektromagneten mit einem Joch, einer Ankerstange und einem Anker. Die Erfindung betrifft des Weiteren ein Verfahren zur Herstellung eines Elektromagneten oder eines Magnetventils sowie eine Montagevorrichtung, welche beispielsweise in einem solchen Verfahren anwendbar ist.

Bekannte Elektromagnete werden typischerweise derart hergestellt, dass der Anker außerhalb des Jochs mit der Ankerstange verbunden wird und die Ankerstange dann zusammen mit dem Anker von Seiten eines in dem Joch ausgebildeten Ankerraums durch eine Ankerbohrung gesteckt wird. Auf der dem Ankerraum abgewandten Seite ist die Ankerstange mit weiteren Elementen, zum Beispiel Scheiben, Federn oder ähnlichem, deren Durchmesser größer als der Durchmesser der Ankerbohrung ist, mechanisch stabil zu verbinden, wozu im Stand der Technik zum Beispiel ein Verschweißen (zum Beispiel Laserschweißen) eingesetzt wird.

Dieses Verschweißen ist relativ aufwändig und kompliziert, da die filigranen Bauteile in einer Einbausituation gehalten werden müssen, wofür ein hoher Aufwand betrieben werden muss. Eine umgekehrte Vorgehensweise, bei welcher die Ankerstange mit den, außerhalb des Ankerraum angeordneten Elementen, vormontiert, von außen in die Ankerbohrung eingesetzt wird und hernach die eingesetzte Ankerstange mit dem Anker verbunden wird, ist nicht möglich, da der Montageplatz im Ankerraum für eine Verschweißung nicht zur Verfügung steht.

Dabei ist zu beachten, dass eine Führung der Ankerstange durch die Ankerbohrung bzw. durch an der Ankerbohrung angeordnete Lager erfolgt, und natürlich diese Führungsaufgabe durch den thermischen Verbund nicht beeinträchtigt sein darf. Die Prozessführung beherrscht diese Randbedingung, allerdings ist es nachteilig, dass das Verschweißen die Auswahl der miteinander zu verbindenden Materialien beschränkt.

Das Dokument US 2004/262557 A1 offenbart ein Verfahren und eine Anordnung zum Stemmen eines Kolbens eines magnetischen Aktuators. Dabei wird ein magnetischer Fluss bei dem Kolben erzeugt, welcher einer Vorspannung entgegenwirkt, die durch eine Feder erzeugt wird. Außerdem wird eine zweite Feder vorgesehen, welche der Vorspannung entgegensetzt wirkt.

Das Dokument DE 4237681 A1 offenbart ein elektromagnetisch betätigbares Ventil mit einem Elektromagneten, der mit einem Anker zusammenwirkt, welcher mit einem Kolben verbunden ist. Dieser wirkt auf einen als Hohlkörper ausgebildeten, längszylindrischen Ventilkörper ein, der an einem dem Elektromagneten abgewandten Ende einen radial nach außen gerichteten Bund aufweist, welcher mit zwei flach ausgebildeten Ventilsitzen zusammenwirkt.

Das Dokument DE 19810241 A1 offenbart ein elektromagnetisches Wegeventil, welches mit einem Spulenkörper ausgestattet ist, der einteilig mit dem Hydraulikteil verbunden ist und der spritzgußtechnisch aus Kunststoffmaterial herstellbar ist. In diesen Spulenkörpern ist eine separate Polgruppe eingesetzt und mittels eines von außen montierbaren Fixierelements passgenau festgelegt.

Das Dokument DE 10 2013 303 711 A1, welches für den Oberbegriff von Anspruch 1 herangezogen wurde, offenbart ein Ventil mit einem Aktuator, über den ein Führungsstößel mit einem Ventilteller betätigbar ist. Dem Ventilteller ist hierbei ein Ventilsitz zugeordnet. Der Ventilteller ist mehrteilig aufgebaut und hat einen Ventilschließring, der zum Schließen des Ventils dichtend am Ventilsitz anliegen kann und der über eine Blattfeder befestigt ist.

Das Dokument DE 392 5794 A1 offenbart ein Elektromagnetventil mit einem Gehäuse, an welches ein Ventilgehäuse angeflanscht ist. Im Gehäuse befindet sich eine Spule, in deren Inneren der Anker und der Gegenpol angeordnet sind. Die einander zugewandten Stirnseiten von Ankerpol und Gegenpol sind konisch ausgebildet, wobei eine Vergrößerung des Luftspalts und damit eine Verbesserung des magnetischen Wirkungsgrades erreicht wird.

Das Dokument EP 0683445 A1 offenbart eine Dichtung zur Verwendung in einer Spulenventilanordnung zur Ausbildung einer flexiblen Fluiddichtung zwischen Untereinheiten des Ventiles.

Das Dokument WO 99/22384 A1 offenbart ein Verfahren zum Zusammenfügen von magnetischen Komponenten eines magnetischen Aktuators auf einer Welle.

Es ist daher Aufgabe der vorliegenden Erfindung, diesen Stand der Technik zu verbessern.

Dies wird erfindungsgemäß durch ein Magnetventil nach Anspruch 1, ein Verfahren nach Anspruch 7 und eine Montagevorrichtung nach Anspruch 11 gelöst. Vorteilhafte Ausgestaltungen sind beispielsweise in den jeweiligen Unteransprüchen enthalten.

Die Erfindung betrifft ein Magnetventil mit einem Elektromagneten, wobei der Elektromagnet folgendes aufweist:
- ein Joch mit einer durchgehenden Ankerbohrung, welche an ihrem ersten Ende in einen Ankerraum mündet,
- eine Ankerstange, welche ein erstes Längsende und ein zweites Längsende aufweist und welche an einem dem zweiten Längsende zugewandten, dem Ankerraum abgewandten Bereich eine Scheibe trägt, und
- einen Anker,
- wobei sich die Ankerstange durch die Ankerbohrung erstreckt und mit ihrem ersten Längsende in den Ankerraum einsteht,
- und wobei der Anker an dem ersten Längsende der Ankerstange mit der Ankerstange durch eine formschlüssige Verbindung, insbesondere eine Verstemmung, verbunden ist.

Überraschenderweise wurde festgestellt, dass die Verstemmung so ausführbar ist, dass ohne eine Nachbearbeitung eine zuverlässige Führung der Baugruppe Anker-Ankerstange an bzw. in der Ankerbohrung möglich ist. Der Verstemmvorgang wird dabei geschickter Weise so ausgeführt, dass keine Verbiegung der Ankerstange erfolgt.

Vorteilhafterweise ist es nun möglich, die Ankerstange mit filigranen Elementen wie Scheiben usw. vorzumontieren und diese so vorgefertigte Baugruppe erleichtert erheblich das Handling bei der Montage in dem Elektromagneten, was einhergeht mit höherer Prozess- bzw. Montagesicherheit.

Da jetzt kein Verschweißen mehr vorgesehen ist, wird auch ein thermischer Stress auf die filigranen Elemente vermieden, was die Konstruktion erheblich erleichtert.

Der erfindungsgemäße Vorschlag ist auch sehr variabel ausgestaltbar, da auf die im Stand der Technik zwingend vorgesehene Randbedingung der Materialgleichheit der zu verschweißen Elemente nicht mehr geachtet werden muss.

Der erfindungsgemäße Vorschlag kombiniert daher überraschenderweise eine höhere Montagesicherheit, also geringere Herstellungskosten mit einer größeren konstruktiven Variabilität.

Der Elektromagnet kann insbesondere bevorzugt mittels eines erfindungsgemäßen Verfahrens hergestellt werden, welches weiter unten beschrieben wird. Auf weitere Vorteile, welche insbesondere mit der Verfahrensführung verbunden sind, wird ebenfalls weiter unten eingegangen.

Bevorzugt ist die formschlüssige Verbindung gebildet von mindestens einer in dem Anker und/oder in der Ankerstange angeordneten Ausnehmung, welche einen Verstemmwulst der Ankerstange bzw. des Ankers aufnimmt. Dies ermöglicht eine stabile und spielfreie Verbindung.

Bevorzugt weisen die Ankerstange oder der Anker eine Nut, insbesondere eine Umfangsnut als Ausnehmung auf, welche mit einem an dem Anker oder der Ankerstange sich insbesondere beim Verstemmen ausbildenden Verstemmwulst in Eingriff steht. Damit kann die Verbindung zwischen Anker und Ankerstange weiter verbessert werden.

Bevorzugt weist der Elektromagnet einen Magnetkern auf, der sich am Joch anschließt und welcher den Ankerraum zumindest teilweise umgibt. Dies ermöglicht eine vorteilhafte Führung magnetischer Feldlinien zur Betätigung des Ankers mittels einer Wicklung.

Weiter bevorzugt weist der Elektromagnet eine den Ankerraum zumindest teilweise umgebende Wicklung auf. Damit kann der Anker in bekannte Weise elektrisch betätigt werden.

Erfindungsgemäß ist in dem Joch an einem dem ersten Ende gegenüberliegenden zweiten Ende der Ankerbohrung eine Vertiefung ausgebildet, in welche die Scheibe einzutauchen vermag. Dies ermöglicht eine vorteilhafte Versenkung der Scheibe und außerdem eine hydraulische Dämpfung mittels eines üblicherweise an der Scheibe vorhandenen Mediums, beispielsweise eines zu steuernden Hydrauliköls.

Bevorzugt weist die Vertiefung einen Innendurchmesser und die Scheibe einen Außendurchmesser auf, und das Verhältnis von Innendurchmesser und Außendurchmesser ist weiter bevorzugt so gebildet, dass sich bei der Bewegung der Scheibe eine hydraulische Dämpfung ergibt. Dies hat sich für den Betrieb des Elektromagneten als vorteilhaft erwiesen.

Bevorzugt beträgt das Durchmesserverhältnis 416,7/17,0. Besonders bevorzugt weist somit der Außendurchmesser ein Maß von 416,7 mm auf und der Innendurchmesser weist ebenso bevorzugt ein Maß von 17 mm auf. Es sei verstanden, dass auch jeweilige Wertebereiche um diese Werte herum bevorzugt sind, beispielsweise kann der Außendurchmesser bevorzugt in einem Intervall zwischen 400 mm und 430 mm liegen und der Innendurchmesser kann bevorzugt in einem Intervall zwischen 15 mm und 19 mm liegen.

Eine Eintauchtiefe der Scheibe beträgt bevorzugt zwischen 0,5 mm und 0,9 mm, besonders bevorzugt 0,7 mm vor Hubende. Es sei verstanden, dass die Eintauchtiefe abhängig von Parametern wie gewünschter Dämpfung, Temperatur und verwendetem Medium gewählt werden kann, um die Eigenschaften des Elektromagneten zu optimieren.

Erfindungsgemäß ist zwischen der Scheibe und dem zweiten Längsende der Ankerstange ein Feder-Dicht-Element auf der Ankerstange aufgebracht, wobei das Feder-Dicht-Element mit der Ankerstange mit bewegt wird und eine in dem Joch ausgebildete Austrittsöffnung des Magnetventils verschließen und freigeben kann. Ein solches Feder-Dicht-Element kann in vorteilhafter Weise zum Verschließen von Öffnungen dienen.

Besonders bevorzugt ist das Feder-Dicht-Element als Mäanderfeder ausgebildet, die an ihrem radialen Außenbereich einen mit der Austrittsöffnung zusammenwirkenden Dichtbereich aufweist. Die Mäanderfeder kann dabei in vorteilhafter Weise einen definierten Druck zum Schließen der Austrittsöffnung ausüben.

Weiter bevorzugt verschließt in der geschlossen Stellung des Magnetventils der Dichtbereich die Austrittsöffnung und das Feder-Dicht-Element ist gespannt, insbesondere in Richtung des Ankerraumes. Dies ermöglicht ein Verschließen der Austrittsöffnung mit einer definierten Vorspannung.

Die Erfindung betrifft des Weiteren ein Verfahren zur Herstellung eines Elektromagneten, wobei der Elektromagnet ein Joch mit einer durchgehenden Ankerbohrung aufweist, welche an ihrem ersten Ende in einen Ankerraum mündet, wobei der Elektromagnet ferner eine Ankerstange mit einem ersten Längsende und einem zweiten Längsende aufweist, welche an einem dem zweiten Längsende zugewandten Bereich eine Scheibe trägt. Dabei wird die Ankerstange mit ihrem ersten Längsende in die Ankerbohrung an deren dem ersten Ende gegenüberliegenden zweiten Ende eingeschoben, bis das erste Längsende der Ankerstange in den Ankerraum einsteht, und dann ein Anker auf das erste Längsende der Ankerstange aufgebracht und mit dem Anker verstemmt wird.

Dieses Verfahren ermöglicht insbesondere die vorteilhafte Herstellung eines Elektromagneten für ein Magnetventil oder eines Magnetventils gemäß zumindest einem der weiter oben beschriebenen Ausführungen. Die weiter oben bereits erwähnten Vorteile gelten entsprechend.

Das erfindungsgemäße Verfahren ermöglicht es ferner, die Stangenbaugruppe aus Ankerstange und einer Mäanderfeder, insbesondere eines Dichtelements, vorab zu montieren und zu prüfen, z.B. auf Rundlauf des Planschlags Stange/Mäanderfeder. Der Anker kann spaltfrei mit der Stange verbunden werden. Die Verwendung eines Standard-Verstemmvorgangs ist möglich, wobei auf bei Verfahren gemäß dem Stand der Technik häufig nötige Verliersicherungen verzichtet werden kann. Durch die feste Verstemmung ist die Verbindung zudem nicht manipulierbar und es ist keine unbeabsichtigte Verstellung oder Justage möglich.

Gemäß einer bevorzugten Ausführung wird die Ankerstange vor dem Verstemmen auf eine Montagevorrichtung aufgesetzt, so dass die Ankerstange mit ihrem zweiten Längsende auf der Montagevorrichtung aufliegt und gegen Herausschieben aus der Ankerbohrung gesichert ist. Die Verwendung einer solchen Montagevorrichtung ermöglicht eine vorteilhafte Verfahrensführung, da beispielsweise wirkende Kräfte aufgenommen werden können.

Besonders bevorzugt wird eine von der Ankerstange maximal aufzunehmende Kraft während des Verstemmens von einer Feder der Montagevorrichtung begrenzt. Dies vermeidet eine Beschädigung der Ankerstange.

Weiter bevorzugt wird das Verstemmen unter Verwendung eines von einer Hydraulikpresse betätigten Verstemmstempels ausgeführt. Dies entspricht einer bewährten Verfahrensführung.

Besonders bevorzugt wird das Verfahren angewendet zum Herstellen eines Elektromagneten, insbesondere für ein erfindungsgemäßes Magnetventil. Dabei kann auf alle weiter oben erläuterten Ausführungen und Varianten des Elektromagneten zurückgegriffen werden. Erläuterte Vorteile gelten entsprechend.

In diesem Zusammenhang wird insbesondere darauf hingewiesen, dass alle mit Bezug auf den Elektromagneten beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar sind und als mitoffenbart gelten. Gleiches gilt auch in umgekehrter Richtung, das bedeutet, nur mit Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Die Erfindung betrifft des Weiteren eine Montagevorrichtung zur Verwendung in einem erfindungsgemäßen Verfahren, wobei die Montagevorrichtung zur Aufnahme der Ankerstange, insbesondere von deren zweiten Längsende, ausgebildet ist und eine Druckfeder aufweist, welche gegen die Ankerstange, insbesondere gegen deren zweites Längsende, drückt und eine während des Verstemmens auf die Ankerstange ausgeübte Kraft begrenzt. Damit kann die Ankerstange während der Durchführung des erfindungsgemäßen Verfahrens in vorteilhafter Weise gehalten und gegen Beschädigungen geschützt werden.

Die Montagevorrichtung weist ferner einen die Feder umgebenden Block auf, auf welchen während der Durchführung des Verfahrens Teile des Magnetventils, insbesondere ein Joch, aufgelegt werden können. Dies ermöglicht eine vorteilhafte Halterung des Jochs während der Durchführung des Verfahrens. Auch kann die Verstemmkraft in vorteilhafter Weise abgeleitet werden.

Weiter bevorzugt ist über der Feder ein Auflageelement zur Kontaktierung der Ankerstange angeordnet. Dies ermöglicht eine besonders geeignete Halterung der Ankerstange.

In der Zeichnung ist die Erfindung insbesondere in Ausführungsbeispielen schematisch dargestellt. Es zeigen:
- Fig. 1: einen Elektromagneten,
- Fig. 2 - 5b: Schritte in einem Verfahren zur Herstellung des Elektromagneten von Fig. 1

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

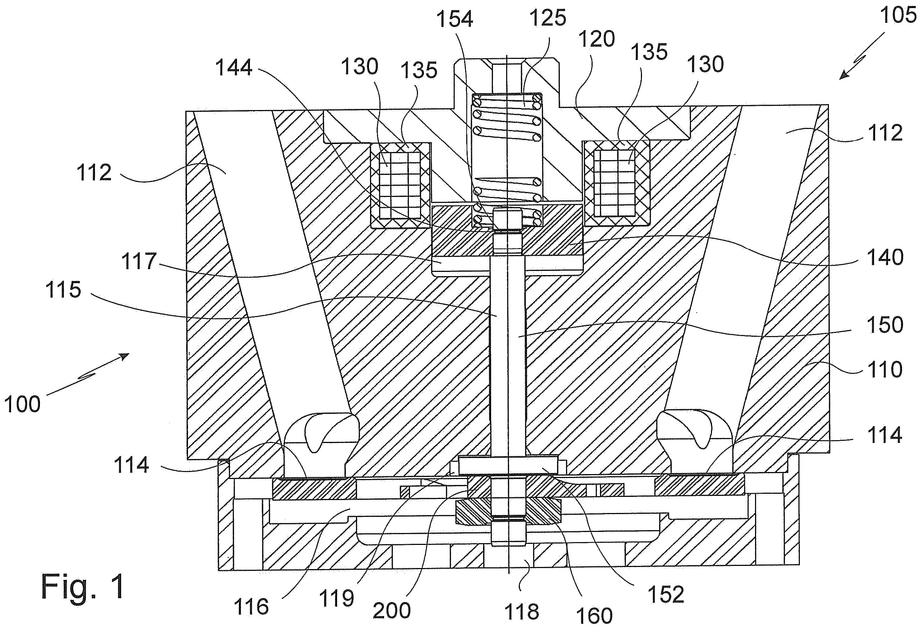

Figur 1 zeigt ein Magnetventil (100) mit einem Elektromagneten 105 gemäß einem Ausführungsbeispiel der Erfindung.
Der Elektromagnet 105 weist ein Joch 110 auf, in bzw. an welchem die anderen, nachfolgend beschriebenen Komponenten angeordnet sind. Der Elektromagnet 105 weist einen Magnetkern 120 auf, der sich am Joch 110 anschließt und welcher den Ankerraum 117 zumindest teilweise umgibt.

In dem Joch 110 sind eine Ankerbohrung 115 und eine Ankerkammer 117 ausgebildet. Der Ankerraum 117 ist oben durch einen Magnetkern 120 verschlossen. In der Ankerkammer 117 ist ein Anker 140 angeordnet, welcher in weiter unten noch näher zu beschreibender Weise mit einer Ankerstange 150 verbunden ist. Die Ankerstange 150 erstreckt sich durch die Ankerbohrung 115 nach unten.

Zwischen dem Magnetkern 120 und dem Anker 140 befindet sich eine Druckfeder 125, welche den Anker vom Magnetkern 120 weg drückt. Seitlich zu der Ankerkammer 117 ist eine Wicklung 130 angeordnet, welche von einem Spulenkern/Spulenkörper 135 umgeben ist bzw. getragen wird. Durch Anlegen eines Gleichstroms durch die Wicklung 130 kann auf den Anker 140 eine magnetische Kraft ausgeübt werden, welche der durch die Druckfeder 125 ausgeübten Kraft entgegengesetzt ist. Dies ermöglicht ein Auf- und Abbewegen des Ankers 140 zusammen mit der Ankerstange 150 durch An- und Abschalten des Gleichstroms durch die Wicklung 130.

Benachbart zu einem dem Anker 140 gegenüberliegenden Ende der Ankerstange 150 weist die Ankerstange 150 eine Scheibe 152 auf, welche radial nach außen absteht. Die Scheibe 152 ist in einer Vertiefung 119 enthalten, welche in dem Joch 110 ausgebildet ist.

In dem in Figur 1 dargestellten Zustand sind der Anker 140, die Ankerstange 150 und die Scheibe 152 in einer gemeinsamen oberen Position angeordnet. Diese Position wird gegen die Kraft der Druckfeder 152 mittels der von der Wicklung 130 vermittelten Magnetkraft erreicht. Es sei verstanden, dass sich beim Abschalten des durch die Wicklung 130 fließenden Gleichstroms der Anker 140, die Ankerstange 150 und die Scheibe 152 gemeinsam nach unten in eine gemeinsame untere Position bewegen.

Am unteren Ende der Ankerstange 150 ist ein Verstemmring 160 angeordnet, welcher mit der Ankerstange 150 verstemmt ist. Damit ist der Verstemmring 160 fest mit der Ankerstange 150 verbunden.

Zwischen dem Ring 152 und dem Verstemmring 160 ist ein Feder-Dicht-Element 200 angeordnet. Das Feder-Dicht-Element 200 wird dabei von dem Ring 152 und dem Verstemmring 160 jeweils unmittelbar kontaktiert, so dass es zwischen dem Ring 152 und dem Verstemmring 160 fest eingespannt ist. Es bewegt sich somit mit der oben beschriebenen Bewegung zwischen oberer Position und unterer Position mit. Anders ausgedrückt kann auch das Feder-Dicht-Element 200 mittels der Wicklung 130 kontrolliert auf und ab bewegt werden.

In dem Joch 110 sind ferner zwei Leitungen 112 sowie eine Ventilkammer 116 ausgebildet. Die Ventilkammer 116 weist zwei Austrittsöffnungen auf, an welchen die Leitungen 112 beginnen. Die Ventilkammer 116 weist ferner einen Einlass 118 auf, durch welchen ein zu steuerndes Medium in die Ventilkammer 116 eintreten kann.

Wie in Figur 1 zu sehen ist verschließt das Feder-Dicht-Element 200 in dem dargestellten oberen Zustand die beiden Austrittsöffnungen 114. Somit kann in diesem Zustand ein durch den Einlass 118 in die Ventilkammer 116 eintretendes Medium nicht in die Leitungen 112 eintreten. Wird dagegen von dem Verbund aus Anker 140, Ankerstange 150, Scheibe 152, Verstemmring 160 und Feder-Dicht-Element 200 die nicht dargestellte untere Position eingenommen, so werden die Austrittsöffnungen 114 von dem Feder-Dicht-Element 200 freigegeben. Dies ermöglicht es, dass ein durch den Einlass 118 in die Ventilkammer 116 eintretendes Medium durch die Austrittsöffnungen 114 in die Leitungen 112 eintritt. Somit kann der Fluss des Mediums gesteuert werden, wie dies einer typischen Funktionalität eines Magnetventils entspricht. Bei dem Medium handelt es sich typischerweise um ein Hydrauliköl. Das Feder-Dicht-Element liegt dabei in der in Figur 1 gezeigten oberen Position mit einer gewissen Vorspannung zum Verschließen an den Austrittsöffnungen 114 an.

Die besondere Gestaltung, bei welcher die Scheibe 152 in die Vertiefung 119 aufgenommen wird, ermöglicht eine hydraulische Dämpfung der Bewegung der Ankerstange 150 und verbundener Komponenten. Hierzu dient das Medium, welches von der Ventilkammer 116 aus auch nach oben fließt und somit einen Anschlag der Scheibe 152 an das Joch 110 abdämpft.

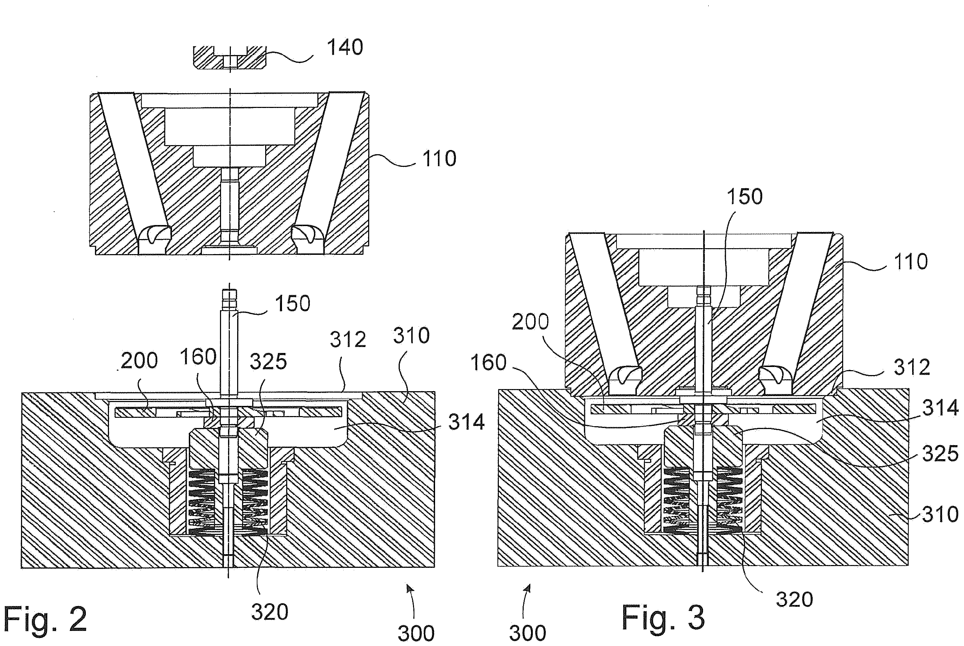

Um den Anker 140 zuverlässig mit der Ankerstange 150 zu verbinden, weist der Anker 140 einen Verstemmwulst 144 auf und die Ankerstange weist eine Nut 154 auf, wobei der Verstemmwulst 144 in die Nut 154 eingreift. Es wird nachfolgend mit Bezug auf die weiteren Zeichnungen genauer erläutert werden, wie diese Verbindung mittels eines Ausführungsbeispiels eines erfindungsgemäßen Verfahrens ausgebildet wird. Die einzelnen Figuren 2 bis 5 zeigen dabei jeweils einen Zustand während der Durchführung eines solchen Verfahrens.

In Figur 2 ist ein Zustand dargestellt, in welcher das Joch 110, der Anker 140 und die Ankerstange 150 noch vollständig voneinander getrennt sind. Die Ankerstange 150 ist dabei in eine Montagevorrichtung 300 aufgenommen, welche gemäß einem Ausführungsbeispiel einer erfindungsgemäßen Montagevorrichtung ausgeführt ist und welche nachfolgend näher beschrieben wird.

Die Montagevorrichtung 300 weist einen Block 310 auf, welcher den größten Teil der Montagevorrichtung 300 einnimmt und für Stabilität sorgt. In dem Block 310 ist eine Kammer 314 ausgebildet, welche zur Oberseite der Montagevorrichtung 300 hin offen ist. An der Oberseite der Montagevorrichtung 300 ist ferner eine die Kammer 314 seitlich erweiternde Vertiefung 312 angeordnet.

In der Kammer 314 ist untenliegend eine Feder 320 angeordnet. Diese ist als Druckfeder ausgebildet, so dass sie einem nach unten gerichteten Druck mit einem nach oben gerichteten Druck entgegenwirkt. Über der Feder 320 ist in der Kammer 314 ein Auflageelement 325 angeordnet, welches dazu ausgebildet ist, die Ankerstange 150 aufzunehmen. Wie gezeigt sind in dem in Figur 2 dargestellten Zustand der Verstemmring 160 sowie das Feder-Dicht-Element 200 bereits mit der Ankerstange 150 verbunden. Ein hierzu erforderliches Verfahren wurde ausgeführt, bevor mit dem erfindungsgemäßen Verfahren in dem in Figur 2 dargestellten Zustand begonnen wird. Der Verstemmring 160 sowie das Feder-Dicht-Element 200 werden somit ebenfalls von dem Auflageelement 325 gehalten.

Ausgehend von dem in Figur 2 dargestellten Zustand wird nun zunächst das Joch 110 auf die Ankerstange 150 von oben aufgesteckt. Dabei wird die Ankerstange 150 in der Ankerbohrung 115 des Jochs 110 aufgenommen Somit liegt das Joch 110 innerhalb der Vertiefung 312 auf dem Block 310 auf. Dies ergibt den in Figur 3 dargestellten Zustand.

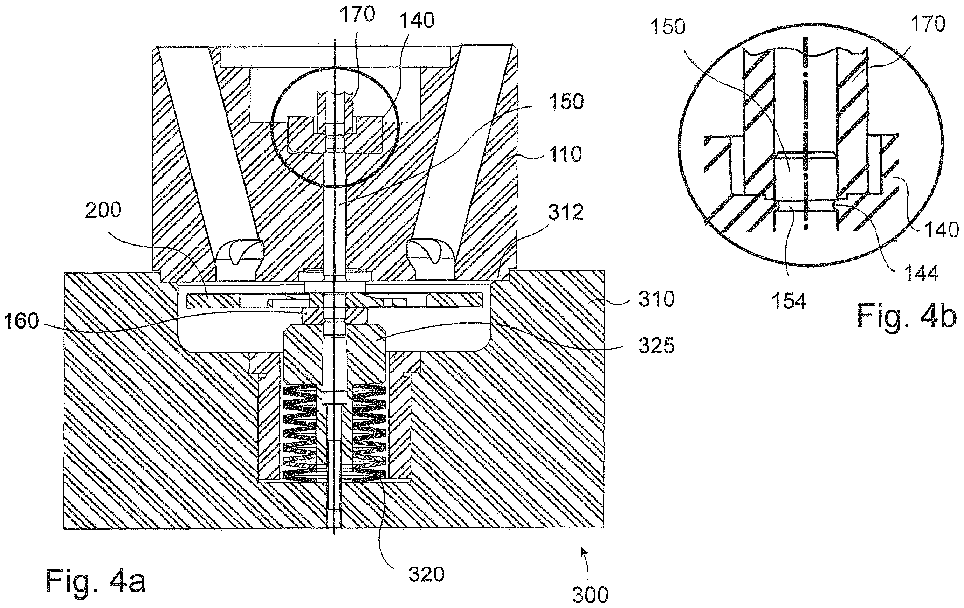

Anschließend wird der Anker 140 von oben auf die Ankerstange 150 aufgesteckt. Um den Anker 140 mit der Ankerstange 150 verstemmen zu können, wird außerdem ein Verstemmstempel 170 aufgesetzt, wie in Figur 4a dargestellt ist. Der Verstemmstempel 170 liegt von oben an den Anker 140 an und übt eine nach unten gerichtete Kraft auf den Anker 140 aus, welche vorliegend von einer hydraulischen Stemmmaschine erzeugt wird. Die maximal auf die Ankerstange 150 ausgeübte Kraft wird dabei durch die Feder 320 begrenzt, da diese ab einer gewissen Kraft nachgeben würde und sich das Auflageelement 325, auf welchem die Ankerstange 150 gehalten wird, nach unten bewegen würde. Eine Beschädigung von Komponenten während des Verstemmvorgangs kann damit wirkungsvoll verhindert werden.

Durch den Verstemmvorgang kommt der Versstemmwulst 144 des Ankers 140 mit der Nut 154 der Ankerstange 150 in Eingriff. Somit wird der in Figur 4a und noch detaillierter in Figur 4b dargestellte Zustand eingenommen. Ein Entfernen des Ankers 140 von der Ankerstange 150 wäre jetzt nur noch mit erheblichem Kraftaufwand möglich.

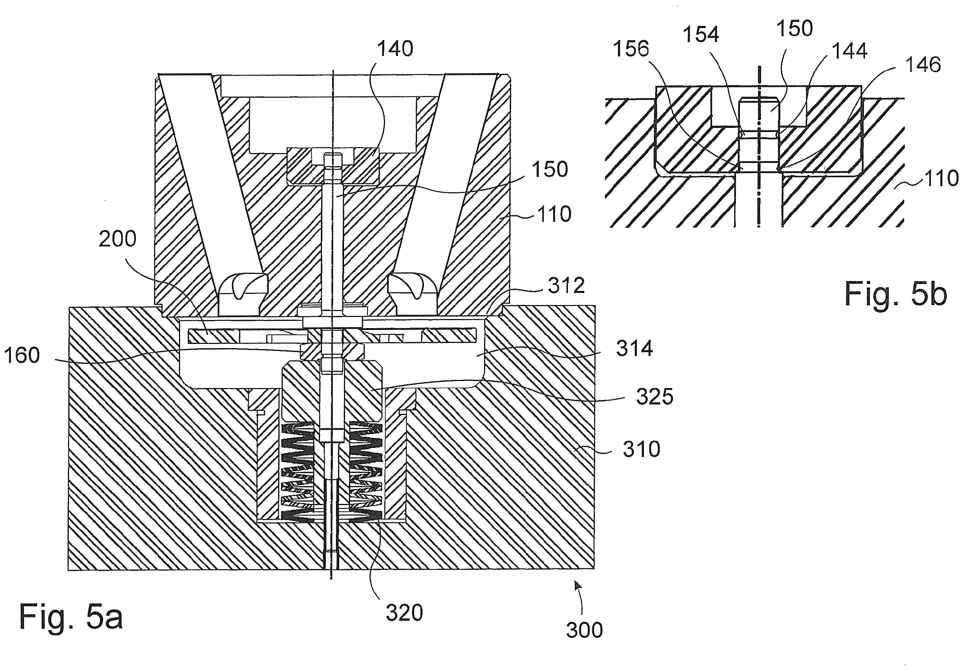

Figur 5a zeigt einen Zustand nach Entfernen des Verstemmstempels 170. Von diesem Zustand ausgehend können weitere Komponenten wie beispielsweise die Wicklung 130 oder der Magnetkern 140 aufgebracht werden.

In der detaillierteren Darstellung von Figur 5b ist ferner zu sehen, dass der Anker 140 und die Ankerstange 150 nicht nur mittels des Verstemmwulsts 144 und der Nut 154 verbunden sind, sondern auch mittels eines weiteren Verstemmwulsts 146 und einer weiteren Nut 156. Diese befinden sich jeweils unterhalb des Verstemmwulsts 144 und der Nut 154 und werden beim weiter oben beschriebenen Vorgang des Verstemmens miteinander in Eingriff gebracht, um die Verbindung zu verbessern.

## Patentansprüche

1. Magnetventil mit einem Elektromagneten (105), wobei der Elektromagnet (105) folgendes aufweist:
- ein Joch (110) mit einer durchgehenden Ankerbohrung (115), welche an ihrem ersten Ende in einen Ankerraum (117) mündet, wobei der Ankerraum (117) in dem Joch (110) ausgebildet ist,
- eine Ankerstange (150), welche ein erstes Längsende und ein zweites Längsende aufweist und welche an einem dem zweiten Längsende zugewandten, dem Ankerraum (117) abgewandten Bereich eine Scheibe (152) trägt, und
- einen Anker (140),
- wobei sich die Ankerstange (150) durch die Ankerbohrung (115) erstreckt und mit ihrem ersten Längsende in den Ankerraum (117) einsteht, und
- wobei der Anker (140) an dem ersten Längsende der Ankerstange (150) mit der Ankerstange (150) durch eine formschlüssige Verbindung, insbesondere eine Verstemmung, verbunden ist, wobei zwischen der Scheibe (152) und dem zweiten Längsende der Ankerstange (150) ein Feder-Dicht-Element (200) auf der Ankerstange (150) aufgebracht ist, wobei das Feder-Dicht-Element (200) mit der Ankerstange (150) mit bewegt wird und eine in dem Joch (110) ausgebildete Austrittsöffnung (114) des Magnetventils (105) verschließen und freigeben kann,
**dadurch gekennzeichnet, dass**
- in dem Joch (110) an einem dem ersten Ende gegenüberliegenden zweiten Ende der Ankerbohrung (115) eine Vertiefung (119) ausgebildet ist, in welche die Scheibe (152) einzutauchen vermag.

2. Magnetventil nach Anspruch 1, **dadurch gekennzeichnet, dass** die formschlüssige Verbindung gebildet ist von mindestens einem im Anker (140) und/oder in der Ankerstange (150) angeordneten Ausnehmung (154), welche einen Verstemmwulst (144) der Ankerstange (150) bzw. des Ankers (140) aufnimmt.

3. Magnetventil nach einem der vorhergehenden Ansprüche, **dadurch gekennzeichnet, dass** die Ankerstange (150) oder der Anker (140) eine Nut (154), insbesondere eine Umfangsnut als Ausnehmung aufweist, welche mit einem an dem Anker (140) oder der Ankerstange (150) sich insbesondere beim Verstemmen ausbildenden Verstemmwulst (144) in Eingriff steht.

4. Magnetventil nach einem der vorhergehenden Ansprüche, **dadurch gekennzeichnet, dass** die Vertiefung (119) bevorzugt einen Innendurchmesser und die Scheibe (152) einen Außendurchmesser aufweist, und das Verhältnis von Innendurchmesser und Außendurchmesser so gebildet ist, dass sich bei der Bewegung der Scheibe (152) eine hydraulische Dämpfung ergibt.

5. Magnetventil nach Anspruch 1, **dadurch gekennzeichnet, dass** das Feder-Dicht-Element (200) als Mäanderfeder ausgebildet ist, die an ihrem radialen Außenbereich einen mit der Austrittsöffnung (114) zusammenwirkenden Dichtbereich aufweist.

6. Magnetventil nach einem der Ansprüche 1 bis 5, **dadurch gekennzeichnet, dass** in der geschlossen Stellung des Magnetventils der Dichtbereich die Austrittsöffnung (114) verschließt und das Feder-Dicht-Element (200) gespannt, insbesondere in Richtung des Ankerraumes (117) gespannt ist.

7. Verfahren zur Herstellung eines Elektromagneten, oder eines Magnetventils nach einem der Ansprüche 1 bis 6, wobei der Elektromagnet das Joch mit der durchgehenden Ankerbohrung aufweist, welche an ihrem ersten Ende in den Ankerraum mündet, wobei der Elektromagnet ferner die Ankerstange mit dem ersten Längsende und dem zweiten Längsende aufweist, welche an dem dem zweiten Längsende zugewandten Bereich die Scheibe trägt, **dadurch gekennzeichnet, dass** die Ankerstange mit ihrem ersten Längsende in die Ankerbohrung an deren dem ersten Ende gegenüberliegenden zweiten Ende eingeschoben wird, bis das erste Längsende der Ankerstange in den Ankerraum einsteht, und dann ein Anker auf das erste Längsende der Ankerstange aufgebracht und mit dem Anker verstemmt wird.

8. Verfahren nach Anspruch 7, **dadurch gekennzeichnet, dass** die Ankerstange vor dem Verstemmen auf eine Montagevorrichtung aufgesetzt wird, so dass die Ankerstange mit ihrem zweiten Längsende auf der Montagevorrichtung aufliegt und gegen Herausschieben aus der Ankerbohrung gesichert ist.

9. Verfahren nach einem der Ansprüche 7 bis 8, **dadurch gekennzeichnet, dass** eine von der Ankerstange maximal aufzunehmende Kraft während des Verstemmens von einer Feder der Montagevorrichtung begrenzt wird.

10. Verfahren nach einem der Ansprüche 7 bis 9, **dadurch gekennzeichnet, dass** das Verstemmen unter Verwendung eines von einer Hydraulikpresse betätigten Verstemmstempels ausgeführt wird.

11. Montagevorrichtung zur Durchführung eines Verfahrens nach einem der Ansprüche 7 bis 10, **dadurch gekennzeichnet, dass** die Montagevorrichtung (300) zur Aufnahme der Ankerstange (150), insbesondere von deren zweiten Längsende, ausgebildet ist und eine Druckfeder (320) aufweist, welche gegen die Ankerstange (150), insbesondere gegen deren zweites Längsende, drückt und eine während des Verstemmens auf die Ankerstange (150) ausgeübte Kraft begrenzt, wobei die Montagevorrichtung (300) ferner einen die Feder (320) umgebenden Block (310) aufweist, auf welchen während der Durchführung des Verfahrens Teile des Magnetventils (100), insbesondere ein Joch (110), aufgelegt werden können.

12. Montagevorrichtung nach Anspruch 11, **dadurch gekennzeichnet, dass** über der Feder (320) ein Auflageelement (325) zur Kontaktierung der Ankerstange (150) angeordnet ist.

## Claims

1. Solenoid valve with an electromagnet (105), wherein the electromagnet (105) has the following:
- a yoke (110) with a continuous armature bore (115), which leads at its first end into an armature housing (117), wherein the armature housing (117) is formed in the yoke (110),
- an armature rod (150), which has a first longitudinal end and a second longitudinal end and which on a region facing the second longitudinal end and facing away from the armature housing (117) supports a disc (152), and
- an armature (140),
- wherein the armature rod (150) extends through the armature bore (115) and enters with its first longitudinal end into the armature housing (117), and
- wherein the armature (140) is connected at the first longitudinal end of the armature rod (150) to the armature rod (150) by a form-fitting connection, in particular caulking, wherein between the disc (152) and the second longitudinal end of the armature rod (150) a spring-sealing-element (200) is attached onto the armature rod (150), wherein the spring-sealing-element (200) is moved along with the armature rod (150) and can close and release an outlet opening (114) of the solenoid valve (105) formed in the yoke (110),
**characterised in that**
- in the yoke (110) at a second end of the armature bore (115) opposite the first end a depression (119) is formed into which the disc (152) can dip.

2. Solenoid valve according to claim 1, **characterised in that** the form-fitting connection is formed by at least one recess (154) made in the armature (140) and/or in the armature rod (150), which recess receives a caulking bulge (144) of the armature rod (150) or the armature (140).

3. Solenoid valve according to any of the preceding claims, **characterised in that** the armature rod (150) or the armature (140) has a groove (154), in particular a peripheral groove as a recess, which engages with a caulking bulge (144) formed on the armature (140) or the armature rod (150) particularly during caulking.

4. Solenoid valve according to any of the preceding claims, **characterised in that** the depression (119) preferably has an inner diameter and the disc (152) has an outer diameter and the ratio of the inner diameter to the outer diameter is such that hydraulic damping is performed during the movement of the disc (152).

5. Solenoid valve according to claim 1, **characterised in that** the spring-sealing-element (200) is designed as a meandering spring, which on its radial outer region has a sealing region cooperating with the outlet opening (114).

6. Solenoid valve according to any of claims 1 to 5, **characterised in that** in the closed position of the solenoid valve the sealing region closes the outlet opening (114) and the spring-sealing-element (200) is tensioned, in particular is tensioned in the direction of the armature housing (117).

7. Method for producing an electromagnet or a solenoid valve according to any of claims 1 to 6, wherein the electromagnet has the yoke with the continuous armature bore, which leads at its first end into the armature housing, wherein the electromagnet also has the armature rod with the first longitudinal end and the second longitudinal end, which supports the disc on the region facing the second longitudinal end, **characterised in that** the armature rod with its first longitudinal end is inserted into the armature bore at its second end opposite the first end, until the first longitudinal end of the armature rod extends into the armature housing, and then an armature is attached to the first longitudinal end of the armature rod and is caulked with the armature.

8. Method according to claim 7, **characterised in that** the armature rod is fitted before caulking onto an assembly device, so that the armature rod bears with its second longitudinal end on the assembly device and is secured from being pushed out of the armature bore.

9. Method according to any of claims 7 to 8, **characterised in that** a maximum force to be received by the armature rod is limited during caulking by a spring of the assembly device.

10. Method according to any of claims 7 to 9, **characterised in that** the caulking is performed by using a caulking stamp activated by a hydraulic press.

11. Assembly device for performing a method according to any of claims 7 to 10, **characterised in that** the assembly device (300) is designed for mounting the armature rod (150), in particular by its second longitudinal end, and has a compression spring (320) which pushes against the armature rod (150), in particular against its second longitudinal end, and limits a force exerted during caulking on the armature rod (150), wherein the assembly device (300) also has a block (310) surrounding the spring (320), on which block, during the implementation of the method, parts of the solenoid valve (100), in particular a yoke (110), can be placed.

12. Assembly device according to claim 11, **characterised in that** by means of the spring (320) a bearing element (325) is arranged for contacting the armature rod (150).

## Revendications

1. Électrovanne avec un électroaimant (105), dans laquelle l'électroaimant (105) présente les éléments suivants :
- une culasse (110) avec un alésage d'induit traversant (115) qui débouche à sa première extrémité dans un espace d'induit (117), dans lequel l'espace d'induit (117) est formé dans la culasse (110),
- une tige d'induit (150) qui présente une première extrémité longitudinale et une seconde extrémité longitudinale et qui porte un disque (152) dans une zone en face de la seconde extrémité longitudinale et à l'écart de l'espace d'induit (117), et
- un induit (140),
- dans lequel la tige d'induit (150) s'étend à travers l'alésage d'induit (115) et fait saillie avec sa première extrémité longitudinale dans l'espace d'induit (117), et
- dans lequel l'induit (140) est connecté, sur la tige d'induit (150), à la première extrémité longitudinale de la tige d'induit (150) par une connexion par complémentarité de forme, en particulier par un matage, dans lequel un élément d'étanchéité à ressort (200) est monté sur la tige d'induit (150) entre le disque (152) et la seconde extrémité longitudinale de la tige d'induit (150), dans lequel l'élément d'étanchéité à ressort (200) est déplacé avec la tige d'induit (150) et peut fermer et libérer une ouverture de sortie (114) de l'électrovanne (105) formée dans la culasse (110),
**caractérisée en ce**
- **qu'**un évidement (119) est formé dans la culasse (110) à une seconde extrémité de l'alésage d'induit (115) opposée à la première extrémité, dans lequel le disque (152) peut être immergé.

2. Électrovanne selon la revendication 1, **caractérisée en ce que** la liaison par complémentarité de forme est formée par au moins un évidement (154) disposé dans l'induit (140) et/ou dans la tige d'induit (150), qui reçoit un bourrelet de matage (144) de la tige d'induit (150) ou de l'induit (140).

3. Électrovanne selon l'une quelconque des revendications précédentes, **caractérisée en ce que** la tige d'induit (150) ou l'induit (140) présente une rainure (154), en particulier une rainure circonférentielle comme évidement, qui s'engage avec un bourrelet de matage (144) formé sur l'induit (140) ou la tige d'induit (150), en particulier lors du matage.

4. Électrovanne selon l'une quelconque des revendications précédentes, **caractérisée en ce que** l'évidement (119) a de préférence un diamètre intérieur et le disque (152) a un diamètre extérieur, et le rapport du diamètre intérieur au diamètre extérieur est formé de sorte qu'un amortissement hydraulique résulte du déplacement du disque (152).

5. Électrovanne selon la revendication 1, **caractérisée en ce que** l'élément d'étanchéité à ressort (200) est conçu comme un ressort à méandres qui, sur sa zone extérieure radiale, présente une zone d'étanchéité qui interagit avec l'ouverture de sortie (114).

6. Électrovanne selon l'une quelconque des revendications 1 à 5, **caractérisée en ce que,** dans la position fermée de l'électrovanne, la zone d'étanchéité ferme l'ouverture de sortie (114) et l'élément d'étanchéité à ressort (200) est tendu, en particulier en direction de l'espace d'induit (117).

7. Procédé de fabrication d'un électroaimant ou d'une électrovanne selon l'une quelconque des revendications 1 à 6, dans lequel l'électroaimant présente la culasse avec l'alésage d'induit traversant qui débouche dans l'espace d'induit à sa première extrémité, dans lequel l'électroaimant présente en outre la tige d'induit avec la première extrémité longitudinale et la seconde extrémité longitudinale, qui porte le disque dans la zone en face de la seconde extrémité longitudinale, **caractérisé en ce que** la tige d'induit est introduite par sa première extrémité longitudinale dans l'alésage d'induit à sa seconde extrémité opposée à la première extrémité jusqu'à ce que la première extrémité longitudinale de la tige d'induit fasse saillie dans l'espace d'induit, puis un induit est appliqué sur la première extrémité longitudinale de la tige d'induit et matée avec l'induit.

8. Procédé selon la revendication 7, **caractérisé en ce que** la tige d'induit est placée sur un dispositif de montage avant le matage, de sorte que la tige d'induit repose avec sa seconde extrémité longitudinale sur le dispositif de montage et est assurée contre une expulsion hors de l'alésage d'induit.

9. Procédé selon l'une quelconque des revendications 7 à 8, **caractérisé en ce qu**'une force maximale à absorber par la tige d'induit pendant le matage est limitée par un ressort du dispositif de montage.

10. Procédé selon l'une quelconque des revendications 7 à 9, **caractérisée en ce que** le matage est effectué en utilisant un poinçon de matage actionné par une presse hydraulique.

11. Dispositif de montage destiné à mettre en œuvre un procédé selon l'une quelconque des revendications 7 à 10, **caractérisé en ce que** le dispositif de montage (300) est conçu pour recevoir la tige d'induit (150), en particulier à partir de sa seconde extrémité longitudinale, et présente un ressort de pression (320) qui est disposé contre la tige d'induit (150), en particulier contre sa seconde extrémité longitudinale, et limite une force exercée sur la tige d'induit (150) lors du matage, dans lequel le dispositif de montage (300) comprend également un bloc (310) entourant le ressort (320), sur lequel des parties de l'électrovanne (100), en particulier une culasse (110), peuvent être installées pendant l'exécution du procédé.

12. Dispositif de montage selon la revendication 11, **caractérisé en ce qu**'un élément d'appui (325) destiné à venir en contact avec la tige d'induit (150) est disposé au-dessus du ressort (320).
